# EUROPEAN PATENT SPECIFICATION

(11) **EP 1 225 116 B1**
(45) Date of publication and mention of the grant of the patent: **29.03.2006**
(21) Application number: 02001215.9
(22) Date of filing: 17.01.2002
(51) Int. Cl.: B62D 5/04, F16H 1/16

(54) **Motor-driven power steering system**
Motorisch angetriebene Servolenkeinrichtung
Système de direction assistée motorisée

(30) Priority: 22.01.2001 JP 2001013510
(43) Date of publication of application: 24.07.2002
(73) Proprietor: Koyo Seiko Co., Ltd., Osaka-shi, Osaka 542-0081 (JP)
(72) Inventor: Obata, Yoshifumi, c/o Koyo Seiko Co., Ltd., Osaka-shi, Osaka 542-0081 (JP)
(74) Representative: Steil, Christian

(56) References cited:
- EP-A- 1 065 132
- DE-A- 2 927 447
- PATENT ABSTRACTS OF JAPAN vol. 2000, no. 05, 14 September 2000 (2000-09-14) & JP 2000 043739 A (KOYO SEIKO CO LTD), 15 February 2000 (2000-02-15)
- PATENT ABSTRACTS OF JAPAN vol. 012, no. 264 (P-734), 23 July 1988 (1988-07-23) & JP 63 049781 A (SHARP CORP), 2 March 1988 (1988-03-02)

## Description

### BACKGROUND OF THE INVENTION

### FIELD OF THE INVENTION

The present invention relates to a motor-driven power steering system employing an electric motor as a source of a steering assist force.

### DESCRIPTION OF RELATED ARTS

Some motor-driven steering systems for automobiles have a first steering shaft coupled to a steering wheel, and a second steering shaft coupled to the first steering shaft via a torsion bar and to a steering mechanism. Such a system is adapted to detect a relative angular offset between the first and second steering shafts in a rotation direction by means of a torque sensor, and transmit rotation of an electric motor to the second steering shaft via a reduction gear mechanism on the basis of the result of the detection by the torque sensor, whereby the operation of the steering mechanism is assisted by the rotation of the electric motor in accordance with the rotation of the steering wheel. Thus, the effort of a driver for a steering operation is alleviated.

A gear mechanism including a worm and a worm wheel is employed as the reduction gear mechanism. The worm and the worm wheel are provided around a worm shaft and the second steering shaft, respectively, and the worm shaft and the second steering shaft are each supported with longitudinally opposite end portions thereof being held by bearings for prevention of radial and axial movement thereof.

When the worm shaft and the worm wheel are mounted in positions, a backlash between the worm and the worm wheel is properly adjusted within the range of a machining tolerance. However, the adjustment of the backlash is very troublesome. That is, parts for each of the components are classified according to dimensional accuracy (so-called stratification), and parts for the respective components are properly matched to provide an acceptable accuracy in combination when being assembled (so-called matching assembling). Further, the backlash is generally adjusted by adjusting a distance between the axes of the worm shaft and the worm wheel after a high load driving operation is performed for run-in (so-called high load run-in operation).

For prevention of noises occurring due to the backlash, the teeth of the worm wheel is generally composed of a synthetic resin.

However, the worm wheel of the synthetic resin is more susceptible to dimensional variations due to temperature change and moisture absorption, and more liable to be worn and flattened. This leads to a change in the distance between the axes of the worm shaft and the worm wheel, and results in a change in the backlash, thereby causing noises and torque variations with a greater operating resistance.

One approach to this problem is to bias one end of the worm shaft toward the worm wheel by biasing means to keep the backlash constant as disclosed, for example, in Japanese Unexamined Patent Publication No. 2000-43739.

In this case, the worm shaft is pivoted about the other end thereof. This pivotal movement is permitted by a minute internal spacing in the bearing which supports the other end of the worm shaft.

In practice, however, the bearing supporting the other end of the worm shaft is pried, failing to provide a pivot angle sufficient for the adjustment of the backlash.

### SUMMARY OF THE INVENTION

It is an object of the present invention to provide a motor-driven power steering system which assuredly suppresses an increase in backlash and noises occurring due to the increase in backlash and so on.

In accordance with a preferred embodiment of the present invention to achieve the aforesaid object, there is provided a motor-driven power steering system which is adapted to transmit rotation of a rotating shaft of an electric motor to a steering mechanism via a worm shaft and a worm wheel for assisting a steering operation, and comprises: first and second bearing members which rotatably support first and second ends of the worm shaft, respectively; and biasing means for biasing the second end of the worm shaft radially toward the worm wheel via the second bearing member, wherein the first bearing member has a pivot support surface for pivotally supporting the first end of the worm shaft.

In the present invention, the second end of the worm shaft is biased toward the worm wheel for smoothly pivoting the worm shaft about the first end thereof, even if a dimensional error between the worm shaft and the worm wheel is increased due to temperature change or wear of the worm wheel. Thus, the increase in backlash can assuredly be suppressed. As a result, the high load run-in operation can be shortened or obviated, and the stratification and the matching assembling can be obviated.

The term bearing member is herein intended to include a bearing and a bearing unit including a bearing.The term bearing is herein intended to include a rolling bearing and a sliding bearing.

### BRIEF DESCRIPTION OF THE DRAWINGS

Fig. 1 is a schematic diagram schematically illustrating the construction of a motor-driven power steering system according to one embodiment of the present invention;
Fig. 2 is a sectional view illustrating major portions of the motor-driven power steering system including a backlash adjusting mechanism;
Fig. 3 is a sectional view taken along a line III-III in Fig. 2; and
Fig. 4 is a schematic sectional view of a bearing mechanism according to another embodiment of the present invention.

### DETAINED DESCRIPTION OF THE PREFERRED EMBODIMENTS

Preferred embodiments of the present invention will be described with reference to the attached drawings.

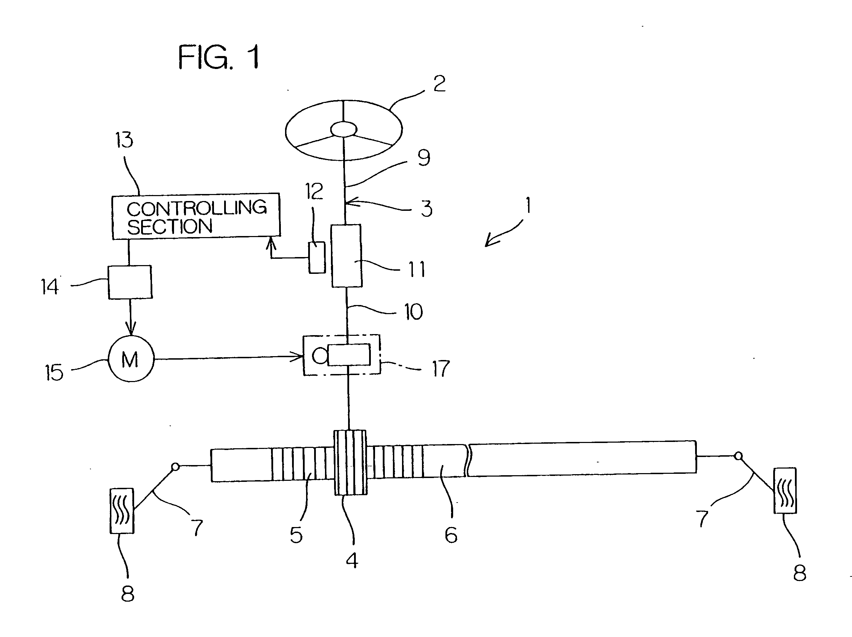

Fig. 1 is a schematic diagram schematically illustrating the construction of a motor-driven power steering system according to one embodiment of the present invention. Referring to Fig. 1, the motor-driven power steering system 1 includes a steering shaft 3 which provides a steering member and coupled to a steering wheel 2, a pinion gear 4 provided at a distal end of the steering shaft 3, a rack gear 5 coupled to the pinion gear 4, and a rack shaft 6 extending transversely of a vehicle body.

Tie rods 7 are respectively coupled to opposite ends of the rack shaft 6, and further coupled to corresponding vehicle wheels 8 via corresponding knuckle arms (not shown). When the steering wheel 2 is turned to rotate the steering shaft 3, the rotation of the steering shaft 3 is converted into linear movement of the rack shaft 6 transverse to the vehicle body by the pinion gear 4 and the rack gear 5. Thus, the vehicle wheels 8 are turned for steering.

The steering shaft 3 includes a cylindrical first steering shaft 9 coupled to the steering wheel 2, and a second steering shaft 10 coupled to the pinion gear 4. The first and second steering shafts 9 and 10 are coaxially coupled with each other via a torsion bar 11.

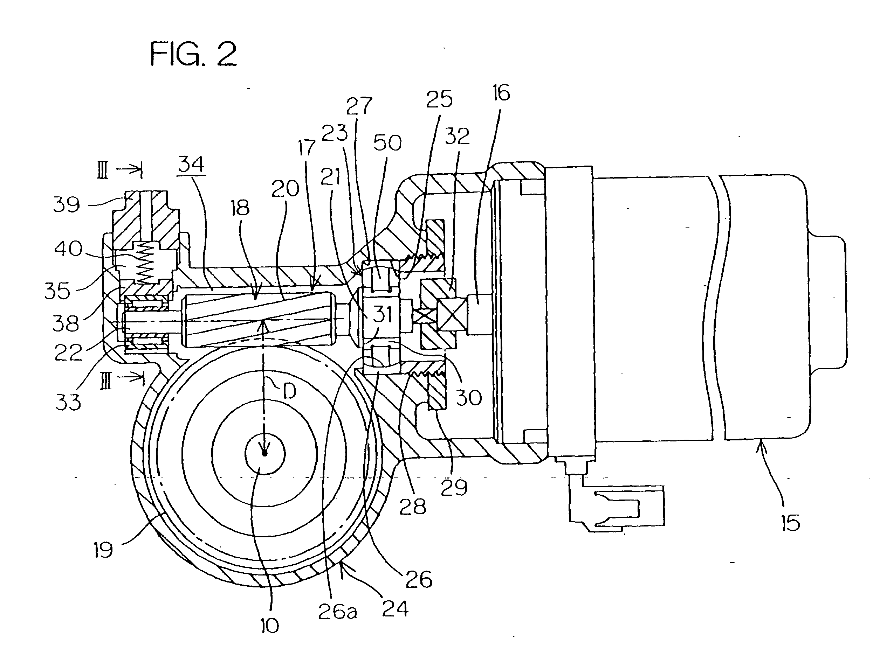

A torque sensor 12 is provided for detecting a steering torque on the basis of a relative angular offset between the first steering shaft 9 and the second steering shaft 10 coupled with each other via the torsion bar 11. The result of the torque detection by the torque sensor 12 is applied to a controlling section 13. The controlling section 13 controls a voltage to be applied to an electric motor 15 for steering assist via a driver 14 on the basis of the torque detection result. The rotation of a rotating shaft 16 (see Fig. 2) of the electric motor 15 is transmitted to the second steering shaft 10 via a reduction gear mechanism 17 including a worm mechanism for the steering assist.

Referring to Fig. 2, the reduction gear mechanism 17 includes a worm shaft 18 and a worm wheel 19 which are meshed with each other. The worm shaft 18 is coupled to the rotating shaft 16 of the electric motor 15, and has worm teeth 20 formed integrally therewith in an axially middle portion thereof. The worm wheel 19 is engaged with the second steering shaft 10 in a corotatable manner. The worm wheel 19 is composed, for example, of a polyacetal resin (POM) or a polyamide resin (PA, nylon).

The worm shaft 18 crosses the axis of the second steering shaft 10. The worm shaft 18 has longitudinally opposite ends as first and second ends 21 and 22, which are rotatably held by first and second bearing mechanisms, respectively.

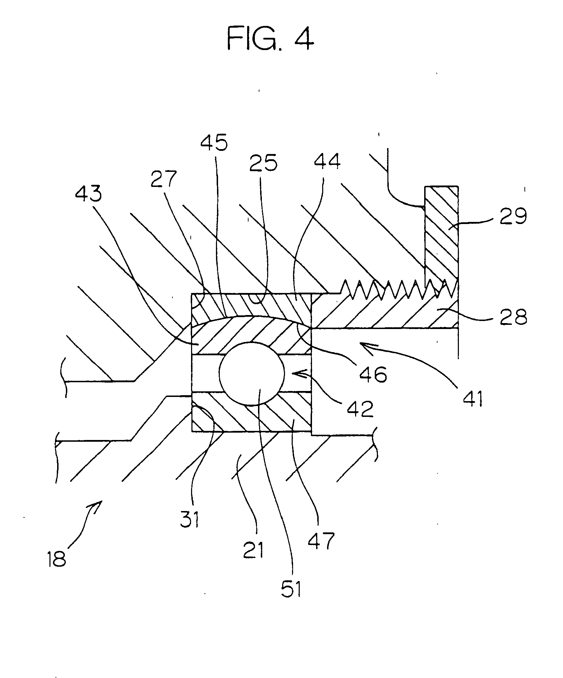

The first bearing mechanism holding the first end 21 of the worm shaft 18 functions to pivot,ally support the worm shaft 18. Usable as the first bearing mechanism is a self-aligning bearing 23 such as a self-aligning ball bearing or a self-aligning roller bearing. In this case, an inner surface 26a of an outer ring 26 of the bearing 23 constitutes a spherical raceway which serves as a spherical support surface for supporting the pivoting worm shaft. Alternatively, a bearing unit which has an aligning function to be fulfilled by a spherical support surface thereof may be employed as the first bearing mechanism as will be described later with reference to Fig. 4.

The first end 21 of the worm shaft 18 is rotatably supported in a bearing hole 25 of a gear housing 24 such as of an aluminum alloy via the self-aligning bearing 23. One end of the outer ring 26 of the self-aligning bearing 23 is positioned in abutment against a positioning step 27 of the gear housing 24. A reference numeral 28 denotes a positioning thread member threaded with a thread hole communicating with the bearing hole 25. The positioning thread member 28 biases the outer ring 26 toward the positioning step 27 in abutment against the other end of the outer ring 26. A reference numeral 29 denotes a lock nut for locking the positioning thread member 28. On the other hand, one end of an inner ring 30 of the self-aligning bearing 23 is engaged with a positioning step 31 of the worm shaft 18. A plurality of rolling elements 50 such as rollers are provided between the outer ring 26 and the inner ring 30.

The first end 21 of the worm shaft 18 is coupled to an end of the rotating shaft 16 via a power transmission joint 32. Usable as the power transmission joint 32 are an Aldham's coupling and a serration coupling.

A rolling bearing 33 such as a needle roller bearing as shown in Fig. 2 is employed as the second bearing mechanism which holds the second end 22 of the worm shaft 18. Alternatively, a sliding bearing may be used as the second bearing mechanism. Further, a self-aligning bearing or a bearing unit having an aligning function may be used as the second bearing mechanism.

A cavity 34 in the gear housing 24 in which the worm shaft 18 is housed opens to the outside via a round hole 35 extending radially of the second end 22 of the worm shaft 18. An outer ring 36 of the rolling bearing 33 is guided by a guide portion 37 of the cavity 34 so that the rolling bearing 33 can be biased radially toward or away from the worm wheel within the cavity 34.

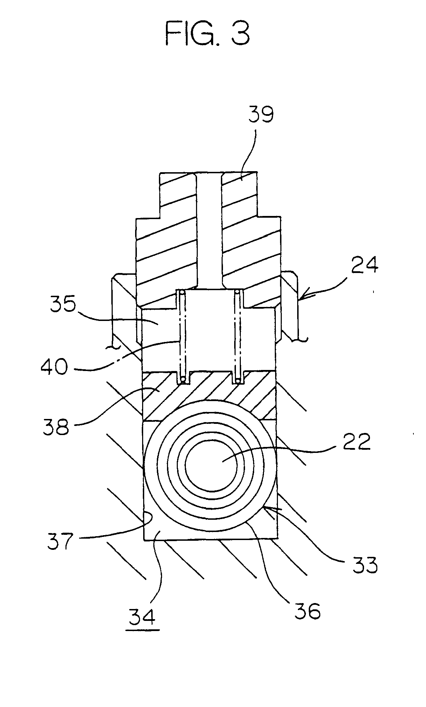

A support yoke 38 which supports the outer ring 36 of the rolling bearing 33 is accommodated in the round hole 35 in a vertically slidable manner as seen in Figs. 2 and 3. An adjustment thread member 39 which closes the round hole 35 is threaded with a thread portion formed in the vicinity of an open end of the round hole 35. A biasing member 40 such as a compression spring for biasing the second end 22 of the worm shaft 18 toward the worm wheel 19 via the support yoke 38 is interposed between the adjustment thread member 39 and the support yoke 38.

In accordance with,this embodiment, the increase in backlash can assuredly be suppressed by biasing the second end 22 of the worm shaft 18 toward the worm wheel 19 and smoothly pivoting the worm shaft 18 about the first end 21 by the aligning function, even if the worm wheel 19 suffers from dimensional variations due to thermal expansion or moisture absorption or from wear or flattening so that a dimensional error between the worm shaft 18 and the worm wheel 19 is increased. As a result, the high load run-in operation can be shortened or obviated. Further, the stratification and the matching assembling can be obviated.

Fig. 4 illustrates a bearing unit 41 having an aligning function to be employed as the first bearing mechanism. The bearing unit 41 includes a rolling bearing 42, and an alignment ring 44 which supports an alignment outer ring 43 of the rolling bearing 42. The alignment ring 44 has a spherical inner peripheral surface 46 which serves as a spherical support surface for receiving a spherical outer peripheral surface 45 of the alignment outer ring 43. The positioning thread member 28 causes the alignment ring 44 to abut against the positioning step 27 for positioning thereof. An inner ring 47 of the rolling bearing 42 is positioned by the positioning step 31 of the worm shaft 18. A plurality of rolling elements 51 such as balls are provided between the alignment outer ring 43 and the inner ring 47. The other construction is the same as shown in Fig. 2, so that like components are denoted by like reference characters and no explanation will be given thereto.

The present invention is not limited to the embodiments described above. For example, a self-aligning bearing having the same construction as the self-aligning bearing 23 shown in Fig. 2 or a bearing unit having the same construction as the bearing unit 41 shown in Fig. 4 may be employed as the second bearing mechanism instead of the rolling bearing 33 shown in Fig. 2, so that both the first and second bearing mechanisms have the self-aligning function. In this case, the worm shaft 18 can more smoothly be pivoted.

While the present invention has thus been described in detail by way of the specific embodiments thereof, those skilled in the art who have fully understood the foregoing will easily come up with variations, modifications and equivalent arrangements of the embodiments. Accordingly, the scope of the present invention is defined by the appended claims and intended to embrace all equivalents as fall within the scope of the appended claims.

## Claims

1. A motor-driven power steering system (1) which is adapted to transmit rotation of a rotating shaft (16) of an electric motor (15) to a steering mechanism (4, 5, 6, 7, 8) via a worm shaft (18) and a worm wheel (19) for assisting a steering operation, the system comprising:
first and second bearing members (23; 41) which rotatably support first and second ends (21, 22) of the worm shaft (18), respectively; and
biasing means (40) for biasing the second end (22) of the worm shaft (18) radially toward the worm wheel (19) via the second bearing member,
wherein the first bearing member (23; 41) has a pivot support surface (26a; 46) for pivotally supporting the first end (21) of the worm shaft (18),
**characterized in that** each of the first and second bearing members (23; 41) comprises a self-aligning bearing.

2. The system of claim 1, **characterized in that** the pivot support surface (26a; 46) includes a spherical support surface (26a; 46), that the second bearing member (33) includes a spherical support surface, and that the spherical support surface (26a) includes a spherical support surface (26a) having a spherical raceway (26a) for rolling elements (50).

3. The system of claim 1 or 2,
**characterized in that** the self-aligning bearing (41) comprises a unit (41) which includes a rolling bearing (42) having an alignment outer ring (43), and an alignment ring (44) which supports the alignment outer ring (43),
wherein the alignment outer ring (43) has a spherical outer peripheral surface (45), and the alignment ring (44) has a spherical inner peripheral surface (46) which receives the spherical outer peripheral surface (45).

## Patentansprüche

1. Motorbetriebenes Servolenksystem (1), das dazu ausgelegt ist, eine Drehung einer Drehwelle (16) eines elektrischen Motors (15) über eine Schneckenwelle (18) und ein Schneckenrad (19) an einen Lenkmechanismus (4, 5, 6, 7, 8) zu übertragen, um einen Lenkvorgang zu unterstützen, wobei das System aufweist:
ein erstes und ein zweites Lagerglied (23; 41) zum drehbaren Lagern eines ersten bzw. eines zweiten Endes (21, 22) der Schneckenwelle (18); und
Vorspannmittel (40) zum Vorspannen des zweiten Endes (22) der Schneckenwelle (18) in radialer Richtung hin zu dem Schneckenrad (19), und zwar über das zweite Lagerglied,
wobei das erste Lagerglied (23; 41) eine Schwenklagerfläche (26a; 46) aufweist, um das erste Ende (21) der Schneckenwelle (18) schwenkbar zu lagern,
**dadurch gekennzeichnet, dass** das erste als auch das zweite Lagerglied (23; 41) ein selbsteinstellendes Lager aufweist.

2. System nach Anspruch 1, **dadurch gekennzeichnet, dass** die Schwenklagerfläche (26a; 46) eine sphärische Lagerfläche (26a; 46) aufweist, und dass das zweite Lagerglied (33) eine sphärische Lagerfläche aufweist, und dass die sphärische Lagerfläche (26a) eine sphärische Lagerfläche (26a) aufweist, die einen sphärischen Laufring (26a) für Wälzelemente (50) aufweist.

3. System nach Anspruch 1 oder 2,
**dadurch gekennzeichnet, dass** das selbsteinstellende Lager (41) eine Einheit (41) aufweist, die ein Wälzlager (42) mit einem Einstellungs-Außenring (43) und einen Einstellungsring (44) beinhaltet, der den Einstellungs-Außenring (43) lagert,
wobei der Einstellungs-Außenring (43) eine sphärische äußere Umfangsfläche (45) aufweist und wobei der Einstellungsring (44) eine sphärische innere Umfangsfläche (46) aufweist, die die sphärische äußere Umfangsfläche (45) aufnimmt.

## Revendications

1. Système motorisé de direction assistée (1) prévu pour transmettre la rotation d'un arbre rotatif (16) d'un moteur électrique (15) à un mécanisme de direction (4, 5, 6, 7, 8) par l'intermédiaire d'un arbre de vis sans fin (18) et une roue de vis sans fin (19) pour assister une opération de braquage, le système comprenant :
- des première et seconde pièces de palier (23 ; 41) supportant respectivement, de façon rotative, des première et seconde extrémités (21, 22) de l'arbre de vis sans fin (18) ; et
- un moyen de poussée (40) pour pousser la seconde extrémité (22) de l'arbre de vis sans fin (18) radialement en direction de la roue de vis sans fin (19) par l'intermédiaire de la seconde pièce de palier ;
la première pièce de palier (23 ; 41) possédant une surface de support de pivot (26a ; 46) pour supporter, de façon pivotante, la première extrémité (21) de l'arbre de vis sans fin (18) ;
**caractérisé en ce que** chacune des première et seconde pièces de palier (23 ; 41) comprend un palier à auto-alignement.

2. Système selon la revendication 1, **caractérisé en ce que** la surface de support de pivot (26a ; 46) comprend une surface de support sphérique (26a ; 46), **en ce que** la seconde pièce de palier (33) comprend une surface de support sphérique, et **en ce que** la surface de support sphérique (26a) comprend une surface de support sphérique (26a) possédant une piste de roulement sphérique (26a) pour des éléments de roulement (50).

3. Système selon la revendication 1 ou 2, **caractérisé en ce que** le palier à auto-alignement (41) comprend une unité (41) comprenant un palier à billes (42) possédant une bague externe d'alignement (43) et une bague d'alignement (44) supportant la bague externe d'alignement (43), dans lequel la bague externe d'alignement (43) possède une surface sphérique de périphérie externe (45) et la bague d'alignement (44) possède une surface sphérique de périphérie interne (46) recevant la surface sphérique de périphérie externe (45).
